# EUROPEAN PATENT SPECIFICATION

(11) **EP 3 871 022 B1**
(45) Date of publication and mention of the grant of the patent: **12.06.2024**
(21) Application number: 19891155.4
(22) Date of filing: 25.11.2019
(51) Int. Cl.: B42D 25/324, B42D 25/36, B42D 25/373, G01J 3/26, G02B 5/18, G02F 1/21, G06F 21/36, G06F 21/60, G09C 5/00, H04L 9/32

(54) **OPTICAL ENCRYPTION AND DECRYPTION STRUCTURE WITH THIN FILM SURFACE COLORING**
OPTISCHE VERSCHLÜSSELUNGS- UND ENTSCHLÜSSELUNGSSTRUKTUR MIT DÜNNSCHICHT-OBERFLÄCHENFÄRBUNG
STRUCTURE DE CHIFFREMENT ET DE DÉCHIFFREMENT OPTIQUE À COLORATION DE SURFACE DE FILM MINCE

(30) Priority: 26.11.2018 TR 201817901
(43) Date of publication of application: 01.09.2021
(73) Proprietor: Atilim Universitesi, Golbasi/Ankara (TR)
(72) Inventor: BAKAN, Gökhan, Ankara (TR); AYAS, Sencer, Kadirli/Osmaniye (TR)
(74) Representative: Yalçiner Patent and Consulting Ltd.
(86) International application number: PCT/TR2019/050996
(87) International publication number: WO 2020/112064

(56) References cited:
- WO-A1-2013/184556
- WO-A1-2017/025277
- US-A1- 2010 307 705
- US-A1- 2017 225 502
- MOIA F: "New coloured optical security elements using Rolic's LPP/LCP technology: devices for 1st to 3rd level inspection", PROCEEDINGS OF SPIE, IEEE, US, vol. 4677, 18 April 2002 (2002-04-18), pages 194-202, XP002273603, DOI: 10.1117/12.462710 ISBN: 978-1-62841-730-2

## Description

### Field of the Invention:

The invention is related to an optical encryption structure which allows for creating shapes on a surface that cannot be detected with eyes or cameras and revealing these created shapes with metal or semi-conductive thin films with flat or shaped form to be covered on the surface.

The invention is particularly related to an optical encryption structure which uses Fabry-Perot, plasmonic or powerful interference effect, enables revealing the hidden information on a surface with a clear substrate and has an encryption and decryption layer that have key and lock integrity between thereof.

### State of the Art:

The methods which are used generally for the optical safety and encryption are obtained by means of placing the materials that are not detected with eyes under normal conditions, but sparkle at determined wave lengths after being stimulated by light. The images revealed at different angles on the banknotes and colors that change with angle can be given as examples. Sparkling materials which are displayed at determined wave lengths can be exemplified with paints seen under purple light and images sensitive to the purple light disposed on the banknotes. Another application example is that secret information is encrypted on a paper by means of an invisible ink and revealing thereof by means of only using proper chemical or physical methods.

There are also other useful methods for optical safety and encryption other than wavelength and light scattering. Some of these methods are mentioned herein below.

In one of the used methods, on surfaces formed with a polymer film on metal, the mechanical features of the polymer film is changed by means of the ultraviolet light and the regions where the features are changes are made visible by means of using factors such as moisture etc.

In another method, wetting capability of some sections of the photonic crystal surfaces are modified, these sections are enabled to be visible or invisible under different liquids.

In another optical encryption method, the features of some sections of the magnetic nano particle embedded polydimethylsiloxane (PDMS) environment are changed by means of ultraviolet light, thus the visibility is obtained by means of moving the nano particles with a magnet in the sections which are not subjected to the ultraviolet light. Therefore, when the magnetic field is removed, the particles disperse randomly and thus the image obtained disappears.

In another optical encryption method, it is ensured to create different shapes with the nano particles which absorb the light at different wave lengths and to reveal each shape by means of viewing the surface under different wave lengths.

In another method, it is ensured to encrypt a shape to a microscopic field by means of changing orientations of metal nano antennas and to reveal the image only under a laser light which is polarized only in a linear manner.

Colorful images can be created on a surface by means of using plasmonic effect with Mg (magnesium) nano particles sensitive to hydrogen. Thus, losing the image due to the change in optical feature of the Mg nanoparticles by means of subjecting the surface to hydrogen and subjecting the surface to oxygen in order to bring the image back are used.

The colorful surface created by means of the plasmonic effect and kept with a thin polymer layer can be made visible again after the polymer layer is removed.

In another encryption method obtained by means of using metasurfaces, for example with *TiO₂* nano particle matrix colorful surfaces are created and these colorful surfaces are made invisible in fluids having determined refractive index.

It is ensured to create image by means of modifying the metal nano-bars dispersed in a 3D volume via laser and to reveal the image with a laser that has the same wave length and polarisation. Although it is hard to save and read this information again, it is possible to encrypt a plurality of images within the same volume by means of changing the laser wave length and polarisation.

Creating different images within the same area by means of changing the orientations of metal nano-antennas and revealing the images by Raman spectroscopy using polarized light can be enabled. In addition to this, it is ensured to create light-reflecting images in infrared by means of changing amplitudes and orientation of metal nano-antennas and viewing these images with thermal camera by means of passing through the linear polarisation filter.

In another optical encryption method, the invisible thin films which make absorption and emission in infrared are enabled to be seen by means of thermal cameras after being heated.

In the state of the art, there are methods which use Fabry-Perot, plasmonic and powerful interference effect. These methods are generally used for creating surface coloring and obtaining colorful images. Together with the Silver-*SiO*₂-silver Fabry-Perot structures used in the state of the art, the color filters which work in reflection and permeable mode are shown and the surface colors are changed by means of changing the materials used in the layers or the thickness of the layers. Small sized colorful images can be obtained by means of keeping the lower and upper silver thicknesses constant but by means of only changing *SiO*₂ thickness. However, this method is not used for the optical safety application. Also there is no encryption and decryption process. It is only used for obtaining a colorful image.

As a result of the preliminary research made in terms of the state of the art, the patent document No. "2013115320" is examined. In the abstract section of the invention subject to the application, the following information takes place; "A method is provided for decryption of an encrypted image consisting of a primary image and at least one secondary image by means of using at least one encryption parameter. When the encrypted image is printed, then the secondary image is created in a manner such that it is not visible for an observer without optical decryption device which has the features corresponding to at least one encryption parameter. The method comprises; obtaining a digital version of the encrypted image, determining at least one encryption parameter and creating a decrypted image from a digitally encrypted image by means of using at least one encryption parameters within the encryption parameter group".

As a result of the preliminary research made in terms of the state of the art, the patent document No. "CN101058285" is examined. In the invention subject to the relevant application, a structure used for creating an optical effect which comprises hot stamped first and second substrates together with an adhesive is disclosed. This structure is hot stamped together with a hologram and optically changing folio, adhesive, thus in order to make the optically changing ink visible, color shifting is permitted.

As a result of the preliminary research made in terms of the state of the art, the patent document No. "EP2695006" is examined. In the invention subject to the relevant application, a component having a metal layer arranged between the transparent dielectric material layers in order to create dielectric-metal interfaces is disclosed. It is mentioned that the relevant component subject to the invention has a specific transmission effect in a spectral band which is defined with the features of the fluctuations in coupling areas, is centered at the centering wavelength and provides visualizing by means of using color change effect via component monitoring angle.

As a result of the preliminary research made in terms of the state of the art the patent document No. "WO2013060817" is examined. In the invention subject to the relevant application, it is disclosed an optical safety component having a direct reflection which comprises a layer made of dielectric material which is visualized between 380 and 780 nm spectral band and is transparent in said observation spectral band. It is mentioned that the relevant optical component subject to the invention uses application of plasmonic resonances in order to exhibit optical effects for allowing the identity authentication.

As a result of the preliminary research made in terms of the state of the art the paper name "New coloured optical security elements using Rolic's LPP/LCP technology: devices for 1st to 3rd level inspection" is examined. This paper relates to polarization interference color filters for transmissive LPP/LCP security devices 2nd level inspection, and also describes encrypted cholesteric LLP/LCP security devices for 1st and 3rd level inspection applications. LPP/LCP security devices are created by structured photo-alignment of an LPP layer through photomasks, thus generating a high resolution, a photo-patterned aligning layer that carries the aligning information of the image to be created.

As a result of the preliminary research made in terms of the state of the art the patent document No. "WO 2013/184556 A1" is examined. In the invention subject to the relevant application, it is disclosed a spectrometer to measure a spectrum of incident radiation. A spectrometer comprising a spectral encoder comprising a dielectric layer having a refractive index and a detector to provide a signal representative of an intensity of the radiation transmitted or reflected by the dielectric layer wherein the dielectric layer comprises at least one of a semiconductor, a metal, a polymer, and a carbon-containing molecule.

The structures used in the state of the art are generally used by means of forming a section of the metal surface. Thus, this provides plasmonic effect. These structures are typically defined as dielectric-metal-dielectric and the effect used is not a physical plasmonic effect. Also these structures are required to have a translucent structure. The risk of imitation of these optical safety measures which have been used during a long time increases. The imitated safety measures are required to be replaced with novel methods. The methods which are proposed as alternatives are mostly operable within the laboratory and their production or keeping/revealing the image methods are complex.

As a result of the abovementioned problems and lack of a current solution, it is an improvement in the related technical field.

### Aim of the Invention:

The objects of the present invention are achieved by means of the appended set of claims.

The most important aim of the invention is to reveal the information hidden in a surface via a transparent substrate by using Fabry-Perot plasmonic or powerful interference effect. Thus, optical encryption and decryption process is performed by means of using two different surfaces and using key and lock compatibility between these two surfaces.

Another aim of the invention is to create shapes on a surface which cannot be seen with eyes or cameras and to reveal these created shapes via metal or semi-conductive flat or shaped thin films to be placed on the surface.

Another aim of the invention is to provide using thereof in all applications which require optical safety or optical identity authentication.

Another aim of the invention is to allow the user having decryption key in hand for performing decryption process in an easy manner outside the laboratory.

Another aim of the invention is to enable the surface structures used for encryption and decryption to absorb a determined spectral section of the coming light and reflect or transmit the remaining part from the surface.

The structural and characteristic features of the present invention will be understood clearly by the following drawings and the detailed description made with reference to these drawings and therefore the evaluation shall be made by taking these figures and the detailed description into consideration.

### Description of Figures:

**FIGURE -1;** is a drawing which shows encryption and decryption layers of the inventive optical encryption system.
**FIGURE -2;** is a drawing which shows the surfaces of the encryption and decryption layers of the inventive optical encryption system for a different usage.
**FIGURE -3;** is a drawing which gives the graphs of the images which are encrypted by means of the inventive optical encryption system and decrypted by means of the decryption layer.
**FIGURE -4;** is a drawing of the inventive optical encryption systems which gives the sectional illustrations of the surface when the decryption layer is present and is not present and exemplary reflection spectrums.
**FIGURE -5;** is a drawing of the inventive optical encryption systems which gives the sectional illustration and exemplary transmission spectrum when the decryption layer is present and is not present.

### Reference Numbers:

**100.** Optical encryption structure
**110.** Encryption layer
**111.** Dielectric layer
**112.** Metal layer
**120.** Decryption layer
**121.** Substrate
**122.** Absorber layer

### Description of the Invention:

The inventive optical encryption structure (100) which is used for optical safety mainly consists of the encryption layer (110) wherein the information is hidden and the decryption layer (120) which enables visualizing this hidden information. The encryption layer (110) and the decryption layer (120) are two different layers and there is key and lock compatibility between them. The information on the encryption layer (110) can only be visualized by means of using the decryption layer (120). The encryption structure (100) is formed by means of covering the surface with predetermined materials with predetermined thicknesses, thus surfaces which are very difficult to imitate are obtained.

The encryption layer (110) consisting of a dielectric layer (111) wherein the information consisting of shape and text required to be hidden is processed and a metal layer (112) which is used to create Fabry-Perot, plasmonic or powerful interference effects.

The decryption layer (120) is located on the encryption layer (110) in order to visualize the encrypted information. The decryption layer (120) consists of a substrate (121) which enables the required mechanical support since dielectric, semi-conductive films are very thin and is used for visualizing the encrypted information and the absorber layer (122) which enables the creation of Fabry-Perot and other optical effects and covered onto a transparent substrate (121) to easily cover and remove on/from the surface.

The reason for using the encryption layer (110) and the decryption layer (120) in surface coloring is that some spectral portion of the light coming to the surface is absorbed and the remaining amount is reflected or transmitted from/through the surface. The spectrum of the reflecting or transmitting light varies according to the selected materials and their thicknesses for the encryption layer (110) and the decryption layer (120). The encryption layer (110) and the decryption layer (120) are composed of thin (nanometer sized) metal, dielectric films. The images with different colors are obtained by means of changing the thickness of the dielectric layer (111) between the metal layer (112) included in the encryption layer and the absorber layer (122) included in the decryption layer. Without the absorber layer (122), the thickness in the dielectric layer (111) is very thin which is not visible. In surfaces formed in such a manner, since the visuality cannot be obtained with eyes thus the information is enabled to be encrypted.

In order to reveal the images, the absorber layer (122) shall be covered and/or positioned on the encryption layer (110). Removing the absorber layer (122) again would hide the information of the view again. In order to easily cover and remove the absorber layer (122) on/from the surface, the absorber layer (122) is covered onto a transparent substrate (121). Thus the absorber layer (122) used with the substrate (121) together form the decryption layer (120) and used as the key for the optical encryption.

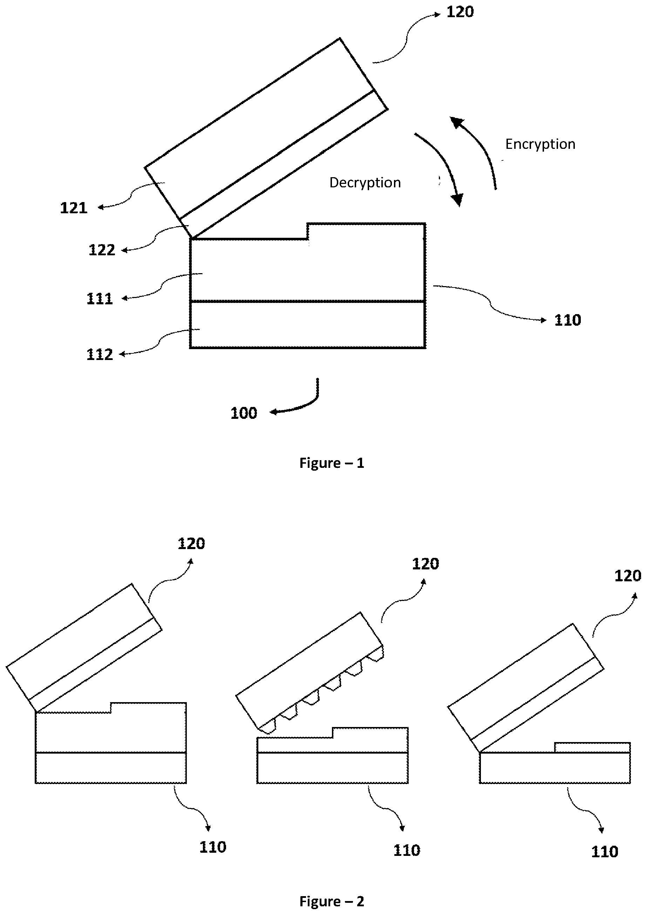

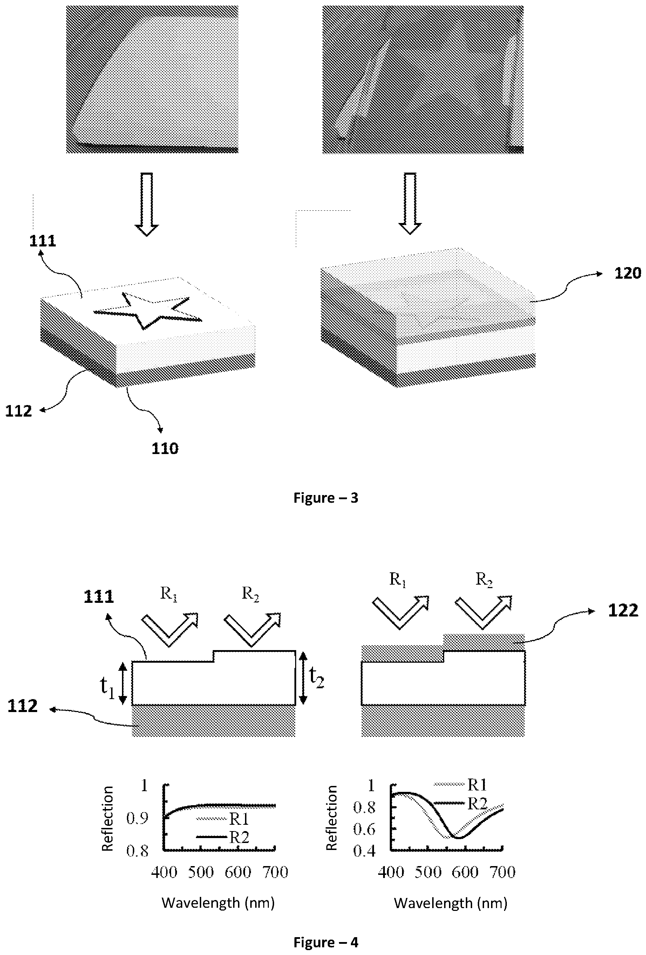

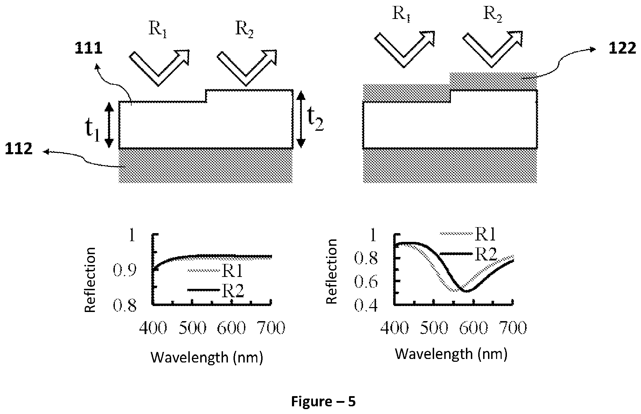

The material and the form of the absorber layer (122) vary according to the effect used. For Fabry-Perot structures, the absorber layer (122) consists of flat metal or semi-conductive films. For plasmonic structures, the absorber layer (122) consists of the metal nano particles. In case semi-conductive is used as an absorber layer (122) and in case the dielectric layer (111) is not used or a very thin dielectric layer (111) is used, the created effect is the powerful interference effect. This effect is shown in Figure 2.

The films to be used as the dielectric layer (111) can be selected among materials which do not absorb the visible wave lengths such as *SiO*₂*, Si*₃*N*₄*, HfO*₂*, Al*₂*O*₃ etc. which have thicknesses between 0 to 200 nm.

The films to be used as the metal layer (112) can be selected among the materials such as bright metals as Al, Ag, Au and the like with thicknesses between 5 to 100 nm and metal folio materials.

Solid or flexible flat surfaces with millimeter thicknesses as glass, PDMS, transparent plastic surfaces and the like can be used as the substrate (121). As the absorber layer (122); bright metals such as Al, Ag, Au and the like or semi-conductive films such as Si, Ge and the like, thin flat or formed films can be used. The films to be used have thicknesses between 1-50 nm. In Figure - 4, the sectional illustrations of the surface and exemplary reflection spectrums are shown when the decryption layer (120) is not present and when the decryption layer (120) is present. The differences in the dielectric thickness (t1 and t2 difference) cannot be visualized when the decryption layer (120) is not present. In this case the image is encrypted. When the decryption layer (120) is positioned which comprises a thin absorber layer (122), the different dielectric thicknesses change the reflection spectrum and the surface color in a manner such that it is perceivable with eyes. In this case the image is revealed. The difference in the thickness of the dielectric layer (111) (t2 and t1 difference) is so thin that it cannot be visible without the decryption layer (120), thus it shall be used as thick as changing the surface color when the decryption layer (120) is present. The absorber layer (122) shall be used with thicknesses which can be able to transmit the light.

The experimental view of the exemplary optical safety application which uses Fabry-Perot effect is given in Figure-3. By means of positioning a substrate layer (121) covered with 30 nm silver film on the dielectric layer (111) on which is hidden by changing the thickness of *SiO*₂ layer in a star shape, the image is revealed.

## Claims

1. Optical encryption structure (100) which allows for creating shapes on a surface that cannot be detected with eyes or cameras and revealing these created shapes with a key, the structure comprising the following:
the following; an encryption layer (110) consisting of a dielectric layer (111) hiding the information wherein the information consists of the shape desired to be hidden is processed and a metal layer (112) used to create Fabry-Perot, plasmonic or powerful interference effects,
• a decryption layer (120) which enables visualizing the hidden information, is located on the encryption layer (110) in order to visualize the hidden information, consists of a transparent substrate (121) which enables the required mechanical support to dielectric, semi-conductive films and an absorber layer (122) which enable creating Fabry-Perot, plasmonic or powerful interference effects wherein, the encryption and the decryption layer (110, 120) that have key and lock integrity between them and the dielectric layer (111) having thicknesses sections which is t1 and t2 that are different from each other and varies the spectrum of the reflecting or transmitting light,
the differences in the dielectric thickness are selected to enable visualization of the shapes in a manner such that it is perceivable with eyes when only the decryption layer (120) is present in such a way that the encryption and the decryption layers (110, 120) are positioned to provide key and lock integrity between them.

2. Optical encryption structure (100) according to Claim 1, **characterized in that**; it comprises a dielectric layer (111) which has a layer thickness between 0 - 200 nm.

3. Optical encryption structure (100) according to Claim 1 or Claim 2, **characterized in that**; it comprises a dielectric layer (111) which consists of one or more of SiO2, Si3N4, HfO2, Al2O3 components and materials which do not absorb visible wave lengths.

4. Optical encryption structure (100) according to Claim 1, **characterized in that**; it comprises a metal layer (112) which has a layer thickness between 5 to 100 nm.

5. Optical encryption structure (100) according to Claim 1 or Claim 4, **characterized in that**; it comprises a metal layer (112) which consists of one or more of Al, Ag, Au components and bright metal materials.

6. Optical encryption structure (100) according to Claim 1, **characterized in that**; it comprises substrate (121) which consists of glass material having a solid and flat surface.

7. Optical encryption structure (100) according to Claim 1, **characterized in that**; it comprises substrate (121) which consists of transparent plastic material having solid and flat surface.

8. Optical encryption structure (100) according to Claim 1, **characterized in that**; it comprises substrate (121) which consists of polydimethylsiloxane, PDMS, material having solid and flat surface.

9. Optical encryption structure (100) according to claim 1, **characterized in that**; it comprises substrate (121) which has flexible and flat surface.

10. Optical encryption structure (100) according to claim 1, **characterized in that**; it comprises an absorber layer (122) having layer thickness between 1 to 50 nm.

11. Optical encryption structure (100) according to Claim 1 or Claim 10, **characterized in that**; it comprises an absorber layer (122) which consists of one or more of Al, Ag, Au components and bright metal materials.

12. Optical encryption structure (100) according to Claim 1 or Claim 10, **characterized in that**; it comprises an absorber layer (122) which consists of one or more of Si, Ge components and semi-conductive films.

## Patentansprüche

1. Optische Verschlüsselungsstruktur (100), die ermöglicht, die mit dem Auge oder mit den Kameras nicht erkennenden Formen auf einer Fläche zu schaffen und diese geschaffenen Formen mittels eines Schlüssels zu enthüllen, die Struktur umfasst Folgendes:
eine Verschlüsselungsschicht (110), die aus der die Information versteckenden dielektrischen Schicht (111), wobei die Information bestehend aus der Form, die versteckt werden soll, verarbeitet wird, und aus der Metallschicht (112) besteht, die zur Schaffung von Fabry-Perot, plasmonischen oder starken Interferenzeffekten verwendet wird,
• eine Entschlüsselungsschicht (120), die die Visualisierung von versteckter Information ermöglicht und sich zur Visualisierung der versteckten Information auf der Verschlüsselungsschicht (110) befindet und die aus einem transparenten Substrat (121), das die notwendige mechanische Unterstützung für die dielektrische, halbleitende Filme ermöglicht, und aus einer Absorberschicht (122) besteht, die die Schaffung von Fabry-Perot, plasmonischen und starken Interferenzeffekten ermöglicht, wobei die Verschlüsselungs- und Entschlüsselungsschicht (110, 120) eine Integrität von Schlüssel und Schloss untereinander aufweist, und die dielektrische Schicht (111) die Dicke-Abschnitte als t1 und t2 aufweist, die sich voneinander unterscheiden und die hinsichtlich der Spektren für Reflektierung oder Übertragung von Licht variieren,
die Unterschiede in Dicke des Dielektrikums dazu ausgewählt sind, die Visualisierung von Formen derart zu ermöglichen, dass sie mit dem Auge erkennbar sind, wenn nur die Entschlüsselungsschicht (120) derart vorhanden ist, dass die Verschlüsselungs- und Entschlüsselungsschichten (110, 120) dazu positioniert sind, untereinander eine Integrität von Schlüssel und Schloss zu ermöglichen.

2. Optische Verschlüsselungsstruktur (100) nach Anspruch 1, **dadurch gekennzeichnet, dass** sie eine dielektrische Schicht (111) umfasst, die eine Schichtdicke von zwischen 0 bis 200 nm aufweist.

3. Optische Verschlüsselungsstruktur (100) nach Anspruch 1 oder Anspruch 2, **dadurch gekennzeichnet, dass** sie eine dielektrische Schicht (111) umfasst, die aus einer oder mehreren von SiO2, Si3N4, HfO2, Al2O3-Komponenten und den die sichtbaren Wellenlängen nicht absorbierenden Materialien besteht.

4. Optische Verschlüsselungsstruktur (100) nach Anspruch 1, **dadurch gekennzeichnet, dass** sie eine Metallschicht (112) umfasst, die eine Schichtdicke von zwischen 5 bis 100 nm aufweist.

5. Optische Verschlüsselungsstruktur (100) nach Anspruch 1 oder Anspruch 4, **dadurch gekennzeichnet, dass** sie eine Metallschicht (112) umfasst, die aus einer oder mehreren von Al, Ag, Au-Komponenten und aus den hellen Metallmaterialien besteht.

6. Optische Verschlüsselungsstruktur (100) nach Anspruch 1, **dadurch gekennzeichnet, dass** sie ein Substrat (121) umfasst, das aus dem Glasmaterial aufweisend eine feste und ebene Fläche besteht.

7. Optische Verschlüsselungsstruktur (100) nach Anspruch 1, **dadurch gekennzeichnet, dass** sie ein Substrat (121) umfasst, das aus dem transparenten Kunststoffmaterial aufweisend eine feste und ebene Fläche besteht.

8. Optische Verschlüsselungsstruktur (100) nach Anspruch 1, **dadurch gekennzeichnet, dass** sie ein Substrat (121) umfasst, das aus Polydimethylsiloxan-Material (PDMS) aufweisend eine feste und ebene Fläche besteht.

9. Optische Verschlüsselungsstruktur (100) nach Anspruch 1, **dadurch gekennzeichnet, dass** sie ein Substrat (121) umfasst, das eine flexible und ebene Fläche aufweist.

10. Optische Verschlüsselungsstruktur (100) nach Anspruch 1, **dadurch gekennzeichnet, dass** sie eine Absorberschicht (122) umfasst, die eine Schichtdicke von zwischen 1 bis 50 nm aufweist.

11. Optische Verschlüsselungsstruktur (100) nach Anspruch 1 oder Anspruch 10, **dadurch gekennzeichnet, dass** sie eine Absorberschicht (122) umfasst, die aus einer oder mehreren von Al, Ag, Au-Komponenten und aus den hellen Metallmaterialien besteht.

12. Optische Verschlüsselungsstruktur (100) nach Anspruch 1 oder Anspruch 10, **dadurch gekennzeichnet, dass** sie eine Absorberschicht (122) umfasst, die aus einer oder mehreren von Si, Ge-Komponenten und den halbleitenden Filmen besteht.

## Revendications

1. Structure de cryptage optique (100) qui permet de créer des formes sur une surface qui ne peuvent être détectées par les yeux ou les caméras et de révéler ces formes créées avec une clé, la structure comprenant les suivants :
une couche de cryptage (110) constituée d'une couche diélectrique (111) cachant l'information dans laquelle l'information consiste de la forme que l'on souhaite cacher est traitée et d'une couche métallique (112) utilisée pour créer des effets Fabry-Perot, plasmoniques ou de puissants effets d'interférence,
• une couche de décryptage (120) qui assure la visualisation de l'information cachée, est située sur la couche de cryptage (110) afin de visualiser l'information cachée, est constituée d'un substrat transparent (121) qui assure le support mécanique nécessaire aux films diélectriques, semi-conducteurs et d'une couche absorbante (122) qui assure la création d'effets Fabry-Perot, plasmoniques ou de puissants effets d'interférence, dans laquelle la couche de cryptage et de décryptage (110, 120) qui ont une intégrité de clé et de serrure entre elles et la couche diélectrique (111) ayant des sections d'épaisseur qui sont t1 et t2 qui sont différentes l'une de l'autre et qui varient le spectre de réflexion ou de transmission de la lumière,
les différences dans l'épaisseur diélectrique sont sélectionnées pour assurer la visualisation des formes de manière à ce qu'elles soient perceptibles par les yeux lorsque seule la couche de décryptage (120) est présente de manière à ce que les couches de cryptage et de décryptage (110, 120) soient positionnées pour fournir l'intégrité de clé et de serrure entre elles.

2. Structure de cryptage optique (100) selon la revendication 1, **caractérisée en ce qu'**elle comprend une couche diélectrique (111) qui a une épaisseur comprise entre 0 à 200 nm.

3. Structure de cryptage optique (100) selon la revendication 1 ou la revendication 2, **caractérisée en ce qu'**elle comprend une couche diélectrique (111) qui est constituée d'un ou plusieurs composants de SiO2, Si3N4, HfO2, Al2O3 et de matériaux qui n'absorbent pas les longueurs d'onde visibles.

4. Structure de cryptage optique (100) selon la revendication 1, **caractérisée en ce qu'**elle comprend une couche métallique (112) qui a une épaisseur comprise entre 5 à 100 nm.

5. Structure de cryptage optique (100) selon la revendication 1 ou la revendication 4, **caractérisée en ce qu'**elle comprend une couche métallique (112) qui est constituée d'un ou plusieurs composants d'Al, d'Ag, d'Au et de matériaux métalliques brillants.

6. Structure de cryptage optique (100) selon la revendication 1, **caractérisée en ce qu'**elle comprend un substrat (121) qui est constitué d'un matériau en verre ayant une surface solide et plate.

7. Structure de cryptage optique (100) selon la revendication 1, **caractérisée en ce qu'**elle comprend un substrat (121) qui est constitué d'un matériau en plastique transparent ayant une surface solide et plate.

8. Structure de cryptage optique (100) selon la revendication 1, **caractérisée en ce qu'**elle comprend un substrat (121) qui est constitué d'un matériau en polydiméthylsiloxane (PDMS) ayant une surface solide et plate.

9. Structure de cryptage optique (100) selon la revendication 1, **caractérisée en ce qu'**elle comprend un substrat (121) qui a une surface flexible et plate.

10. Structure de cryptage optique (100) selon la revendication 1, **caractérisée en ce qu'**elle comprend une couche absorbante (122) ayant une épaisseur comprise entre 1 à 50 nm.

11. Structure de cryptage optique (100) selon la revendication 1 ou la revendication 10, **caractérisée en ce qu'**elle comprend une couche absorbante (122) qui est constituée d'un ou plusieurs composants d'Al, d'Ag, d'Au et de matériaux métalliques brillants.

12. Structure de cryptage optique (100) selon la revendication 1 ou la revendication 10, **caractérisée en ce qu'**elle comprend une couche absorbante (122) qui est constituée d'un ou plusieurs composants de Si, Ge et de films semi-conducteurs.
